# EUROPÄISCHE PATENTSCHRIFT

(11) **EP 1 479 551 B1**
(45) Veröffentlichungstag und Bekanntmachung des Hinweises auf die Patenterteilung: **27.06.2007**
(21) Anmeldenummer: 04011627.9
(22) Anmeldetag: 17.05.2004
(51) Int. Cl.: B60J 3/02, B60J 7/00

(54) **Sonnenschutzrolloanordnung für ein Fahrzeugdach sowie Fahrzeugdach mit einer solchen Sonnenschutzrolloanordnung**
Roller sunblind arrangement for vehicle roof and vehicle roof equipped with such roller sunblind arrangement
Store pare-soleil enroulable pour toit de véhicule et véhicule équipé avec ce store pare-soleil enroulable

(30) Priorität: 20.05.2003 DE 10322709
(43) Veröffentlichungstag der Anmeldung: 24.11.2004
(73) Patentinhaber: Webasto AG, 82131 Stockdorf (DE)
(72) Erfinder: Schleicher, Bernd, 80689 München (DE); Stemmer, Thomas, 81371 München (DE)

(56) Entgegenhaltungen:
- EP-A- 0 644 075
- FR-A- 2 726 512
- US-B1- 6 481 787

## Beschreibung

Die vorliegende Erfindung betrifft eine Sonnenschutzrolloanordnung für ein Fahrzeugdach sowie ein mit einer solchen Sonnenschutzrolloanordnung versehenes Fahrzeugdach.

Aus der DE 199 10 949 A1 ist eine Sonnenschutzrolloanordnung für eine Fahrzeugwindschutzscheibe bekannt, wobei im linken oberen Randbereich der Windschutzscheibe und im rechten oberen Randbereich der Windschutzscheibe je eine in die Aufwickelrichtung vorgespannte Wickelwelle mit einer darauf aufwickelbaren Rollobahn vorgesehen ist. Die beiden Wickelwellen sind dabei am oberen Rand der Windschutzscheibe angeordnet. Jede Rollobahn ist an ihrem freien Ende mit einem Zugspriegel versehen, der an seinem zu dem Außenrand der Windschutzscheibe hinweisenden Ende von einem in der jeweiligen A-Säule der Fahrzeugkarosserie druckfest geführten Antriebskabel für die Abwickelbewegung der Rollobahn angetrieben ist. Für jeden Zugspriegel ist dabei ein eigenes Antriebskabel vorgesehen, wobei die beiden Antriebskabel von einem gemeinsamen Ritzel angetrieben werden können, das wiederum von einem Elektromotor angetrieben wird. Die beiden Rollobahnen sind parallel und in Abstand zueinander spiegelsymmetrisch angeordnet.

Eine weitere zweitgeteilte Rolloanordnung für eine Fahrzeugscheibe mit je einem seitlich geführten Zugspriegel ist in der DE 38 13 153A1 beschrieben.

Ferner sind Sonnenschutzrolloanordnungen für mindestens in einem Teilbereich transparente Fahrzeugdächer bekannt, wobei üblicherweise die Rollobahn die gesamte Breite des transparenten Dachbereichs überspannt.

Es ist Aufgabe der vorliegenden Erfindung, eine Sonnenschutzrolloanordnung für ein Fahrzeugdach sowie ein mit einer solchen Sonnenschutzrolloanordnung versehenes Fahrzeugdach zu schaffen, wobei die Sonnenschutzrolloanordnung den Zugang zu nicht transparenten Dachbereichen möglichst wenig behindern soll und dennoch eine hinreichende Betriebssicherheit der Rolloanordnung bei einfacher Konstruktion erzielt werden soll.

Diese Aufgabe wird erfindungsgemäß gelöst durch eine Sonnenschutzrolloanordnung gemäß Anspruch 1 bzw. 2 sowie ein mit einer solchen Sonnenschutzrolloanordnung versehenes Fahrzeugdach gemäß Anspruch 15 bzw. 19.

Diese erfindungsgemäße Lösung weist folgende Vorteile auf. Durch das Vorsehen zweier parallel zueinander und im Abstand voneinander angeordneter Rollobahnen ist es möglich, beispielsweise eine mittig angeordnete und in Dachlängsrichtung verlaufende Konsole im Fahrzeugdach zwischen den transparenten Bereichen vorzusehen, ohne dass die Rollobahnen selbst im ausgezogenen Zustand, in welchem sie die seitlich der Konsole angeordneten transparenten Dachbereiche abdecken, den Zugang zu der Konsole behindern würden. Durch das Vorsehen von getrennten Zugspriegeln für jede Rollobahn bleibt der Bereich zwischen den beiden Rollobahnen auch während bzw. nach dem Abwickeln der Rollobahnen frei zugänglich. Dadurch, dass jeder Zugspriegel von einem Antriebselement angetrieben wird, kann ein bequemes Abwickeln der Rollos erzielt werden. Dadurch, dass jeder Zugspriegel nicht direkt, sondern mittels eines in einem mittleren Abschnitt des Zugspriegels an dem Zugspriegel angreifenden Kragarm angetrieben wird, kann eine mittige, d.h. symmetrische Krafteinleitung in den Zugspriegel und damit in die Rollobahn beim Abwickeln erzielt werden, wodurch ein Verkanten des Zugspriegels vermieden werden kann.

Bei der Lösung gemäß Anspruch 1 bzw. 15 kann durch das Vorsehen einer durchgehenden, gemeinsamen Wickelwelle für die beiden Rollobahnen auf einfache Weise eine stabile Lagerung der Wickelwelle für die beiden Rollobahnen erzielt werden.

Bei der Lösung gemäß Anspruch 2 bzw. 19 ist, im Gegensatz zu der Lösung gemäß Anspruch 1 bzw. 15, für jede Rollobahn eine eigene Wickelwelle vorgesehen. Dies ist vor allem dann vorteilhaft, wenn auch im Bereich der Wickelwelle(n) ein freier Zugang zum zentralen Dachbereich, d.h. zu einer dort angeordneten Konsole, erforderlich oder wünschenswert ist.

Bei der Konsole kann es sich beispielsweise um eine von dem Fahrzeuginnenraum aus zugängliche Gepäckablage, eine Halterung für Anzeigemedien, insbesondere Bildschirme für Informations- bzw. Unterhaltungsdarbietungen, und/oder eine Halterung für Beleuchtungsmittel für den Fahrzeuginnenraum handeln.

Bevorzugte Ausgestaltungen der Erfindungen ergeben sich aus den Unteransprüchen.

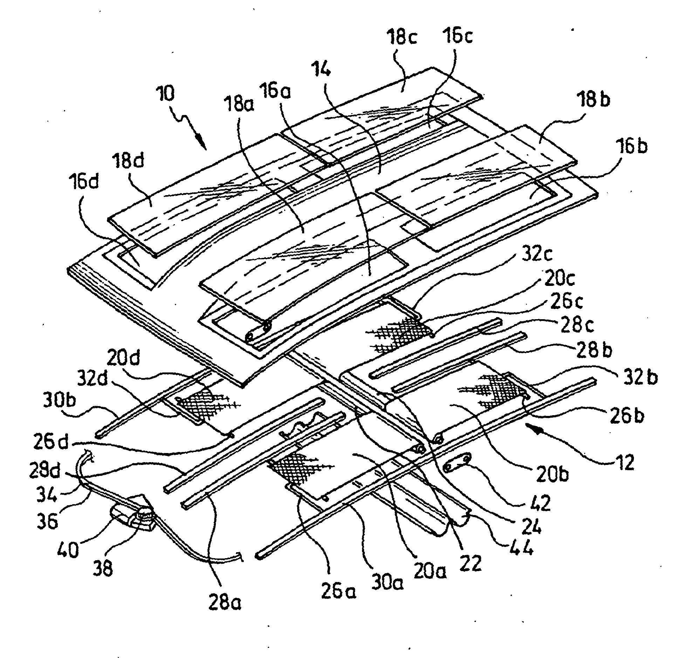

Im folgenden wird die Erfindung anhand der beigefügten Zeichnung beispielhaft näher erläutert, die eine perspektivische Explosionsdarstellung eines erfindungsgemäßen Fahrzeugdaches mit einer erfindungsgemäßen Sonnenschutzrolloanordnung zeigt.

Das in der einzigen Figur gezeigte Fahrzeugdach umfasst einen Hauptrahmen 10 sowie eine Sonnenschutzrolloanordnung 12, die zusammen in einer entsprechenden Fahrzeugkarosserieöffnung im Dachbereich montiert bzw. befestigt werden. Die Oberseite des Hauptrahmens 10 bildet dabei in diesem Bereich die Dachaußenhaut. Der Hauptrahmen 10 kann beispielsweise aus mittels Langfaserinjektion (LFI) verstärktem Polyurethan bestehen und weist in seinem zentralen Abschnitt eine sich in Dachlängsrichtung erstreckende Konsole 14 auf, bei welcher es sich beispielsweise um eine aus dem Fahrzeuginnenraum zugängliche Gepäckablage, eine Halterung für Anzeigemedien, insbesondere Bildschirme für Informations- und/oder Unterhaltungsdarbietungen, und/oder eine Halterung für Beleuchtungsmittel für den Fahrzeuginnenraum handeln kann.

Zu beiden Seiten der Konsole 14 sind jeweils zwei hintereinander angeordnete langgestreckte Öffnungen 16a - 16d vorgesehen, welche jeweils von einer auf den Hauptrahmen 10 aufgeklebten Scheibe, beispielsweise einer Scheibe aus Einscheibensicherheitsglas mit einer Dicke von 4 mm, 18a - 18d verschlossen sind. Die Konsole 14 ist in den Hauptrahmen 10 integriert und an ihrer Oberseite mit einer Kunststofffolie versehen. Der Hauptrahmen 10 kann mit Querstreben verstärkt sein, die in den Fahrzeugrohbau eingeschraubt sind.

Die Rolloanordnung 12 dient dazu, die transparenten Scheiben 18a - 18d wahlweise bezüglich des Fahrzeuginnenraums mindestens teilweise zu verdecken, um einen übermäßigen Lichteinfall bzw. übermäßige Wärmeeinstrahlung durch die Scheiben 18a - 18d hindurch zu verhindern. Zu diesem Zweck sind vier Rollobahnen 20a - 20d vorgesehen, die jeweils einer der Scheiben 18a - 18d bzw. einer der Öffnungen 16a - 16d zugeordnet und entsprechend unterhalb dieser angeordnet sind. Die Rollobahnen sind paarweise angeordnet, wobei für die beiden vordern Rollobahnen 20a und 20d eine gemeinsame Wickelwelle 22 und für die beiden hinteren Rollobahnen 20b und 20c eine gemeinsame Wickelwelle 24 vorgesehen ist. Die beiden Wickelwellen 22 und 24 sind dabei parallel und benachbart zueinander etwa in der Mitte des Hauptrahmens 10 in Dachquerrichtung verlaufend angeordnet.

Statt eine gemeinsame Wickelwelle für je zwei der Rollobahnen vorzusehen, könnte auch für jede der Rollobahnen 20a - 20d eine eigene Wickelwelle vorgesehen sein. Letzteres hat den Vorteil, dass die Konsole 10 auch im Bereich der Wickelwelle aus dem Fahrzeuginnenraum frei zugänglich bleibt, während die erst genannte Lösung mit einer gemeinsamen Wickelwelle für je zwei Rollobahnen den Vorteil hat, dass ein geringerer Durchmesser und damit eine geringere Bauhöhe ausreichend ist sowie die Lagerung und die Konstruktion insgesamt einfacher ist. Ein weiterer Vorteil beim Vorsehen einer separaten Wickelwelle für jede Rollobahn besteht darin, dass dann jede Rollobahn unabhängig von allen anderen Rollobahnen betätigt werden könnte.

Die gezeigte Lösung mit den durchgehenden Wickelwellen 22 und 24 hat dagegen den Vorteil, dass die Lagerung einfacher ist und Wickelwellen mit geringerem Durchmesser verwendet werden können. Die beiden Wickelwellen 22, 24 sind dabei im gezeigten Beispiel mit einem gemeinsamen Lager 42 dachfest gelagert. Ferner ist für die beiden Wickelwellen 22, 24 eine Abdeckung 44 vorgesehen.

Im folgenden sollen zunächst die beiden vorderen Rollobahnen 20a, 20d beschrieben werden. Die beiden Rollobahnen 20a und 20d sind parallel und in Abstand zueinander angeordnet und können in die gleiche Richtung (hier nach vorn) abgewickelt werden, wobei der Abstand zwischen den beiden Rollobahnen 20a und 20d so bemessen ist, dass auch dann, wenn die beiden Rollobahnen 20a und 20d abgewickelt, d.h. ausgezogen, sind, um die Scheiben 18a und 18d abzudecken, die Konsole 14 aus dem Fahrzeuginnenraum frei zugänglich bzw. vollständig sichtbar bleibt.

Die beiden Rollobahnen 20a und 20d können beide parallel zueinander mittels je eines Zugspriegels 26a bzw. 26d nach vom ausgezogen bzw. abgewickelt werden. Der Zugspriegel 26a bzw. 26d ist dabei zu beiden Seiten mittels einer dachfesten Führungsschiene 28a und 30a bzw. 28d und 30b in Dachlängsrichtung verschiebbar geführt. Die gemeinsame Wickelelle 22 ist in die Aufwickelrichtung (d.h. in der Figur nach hinten) vorgespannt, beispielsweise mittels einer entsprechenden Feder, so dass das Abwickeln der Rollobahnen 20a und 20d entgegen dieser Vorspannkraft erfolgt, während das Aufwickeln durch die Vorspannfederkraft selbsttätig erfolgt. Aus diesem Grund ist es ausreichend, wenn in die Zugspriegel 26a und 26d eine Krafteinleitung nur in der Abwickelrichtung, d.h. nach vom, erfolgt.

Der Antrieb der Zugspriegel 26a und 26d erfolgt jeweils mittels eines Kragarms bzw. Auslegers 32a bzw. 32d, der in einem mittleren Abschnitt des Zugspriegels 26a bzw. 26d angreift, vorzugsweise im mittleren Drittel des jeweiligen Zugspriegels, und am stärksten bevorzugt genau in der Mitte des jeweiligen Zugspriegels, wie es in der Figur gezeigt ist. Der Ausleger 32a bzw. 32d wird dabei von einem Gleitelement (nicht gezeigt) angetrieben, welches in der Führungsschiene 30a bzw. 30b in Dachlängsrichtung verschiebbar geführt und angetrieben ist. Da, wie bereits erwähnt, die Krafteinleitung in den jeweiligen Ausleger 32a, 32d nur in eine Richtung (im gezeigten Beispiel nach vom) erfolgen muss, kann das entsprechende Gleitelement entweder fest mit dem Ausleger 32a, 32d verbunden sein oder diesen lediglich durch Anlage in die Richtung der Abwickelbewegung der entsprechenden Rollobahn 20a, 20d anschieben.

Der Antrieb einer jeden Rollobahn 20a, 20d und die Führung des entsprechenden Gleitelements erfolgt damit jeweils auf der Seite der Rollobahn, die von der jeweils anderen Rollobahn wegweist.

Jedes Gleitelement wird von einem in der Führungsschiene 30a bzw. 30b drucksteif geführten Antriebskabel 34 bzw. 36 angetrieben. Die beiden Antriebskabel 34 und 36 werden von einem gemeinsamen Ritzel 38, welches von einem Elektromotor 40 angetrieben wird, in an sich bekannter Weise gegenläufig angetrieben, wobei sich beide Kabel 34, 36 von oben gesehen U-förmig und parallel zueinander erstrecken, so dass in jeder Führungsschiene 30a bzw. 30b zwei parallele Kabelstränge verlaufen, nämlich das einlaufende Ende des einen Kabels und das auflaufende Ende des anderen Kabels. Da diese beiden Kabelstränge sich konstruktionsbedingt in entgegengesetzter Richtung bewegen, können auf diese Weise insgesamt vier Gleitelemente synchron angetrieben werden, wie dies nachfolgend näher erläutert ist.

Insgesamt ist die Rollo-Anordnung 12 spiegelsymmetrisch ausgebildet, wobei die beiden hinteren Rollobahnen 20b und 20c in entgegengesetzter Richtung zu den beiden vorderen Rollobahnen 20a, 20d schließen, nämlich durch Verschieben des jeweiligen Zugspriegels 26b bzw. 26c nach hinten. Durch eine entsprechende Wahl der Ankopplung der jeweiligen Zugspriegel 26a - 26d an die entsprechenden Antriebskabelstränge kann somit ein synchrones Ausziehen bzw. Abwickeln aller vier Rollobahnen 20a - 20d mittels eines einzigen Elektromotors 40 und zweier Antriebskabel 34, 36 erzielt werden. Da, wie beschrieben, eine Krafteinleitung in die Zugspriegel 26a - 26d nur in die Abwickelrichtung erfolgen muss, sind grundsätzlich sogar unterschiedliche Längen der Rollobahnen 20a - 20d realisierbar, indem dann beispielsweise die Ankopplung des Gleitelements für die kürzere Rollobahn an das entsprechende Antriebskabelende nicht fest, d.h. starr, sondern über einen Mitnehmer ausgebildet ist.

In dem in der Figur gezeigten Beispiel sind die beiden äußeren Führungsschienen 30a und 30b durchgängig ausgebildet und wirken somit sowohl für die vorderen Rollobahnen 20a, 20d als auch für die hinteren Rollobahnen 20b, 20c.

Die alle beschriebenen festen Elemente der Rolloanordnung 12 sind vorzugsweise an der Unterseite des Hauptrahmens 10 fest angebracht bzw. in diesem integriert.

### Bezugszeichenliste

- 10: Hauptrahmen
- 12: Sonnenschutz-Rollo-Anordnung
- 14: Konsole
- 16a-d: Öffnungen
- 18a-d: Scheiben
- 20a-d: Rollobahnen
- 22, 24: Wickelwellen
- 26a-d: Zugspriegel
- 28a-d: innere Führungsschienen
- 30a,b: äußere Führungsschienen
- 32a-d: Kragarme, Ausleger
- 34, 36: Antriebskabel
- 38: Ritzel
- 40: Elektromotor
- 42: Lager für 22, 24
- 44: Abdeckung

## Patentansprüche

1. Sonnenschutz-Rollo-Anordnung für ein Fahrzeugdach, mit einer ersten Wickelwelle (22), auf welche zwei in Abstand voneinander und parallel zueinander angeordnete Rollobahnen (20a, 20d) aufwickelbar sind, wobei die Rollobahnen an ihrem freien Ende mit je einem Zugspriegel (26a, 26d) versehen sind, durch dessen Betätigung die jeweilige Rollobahn von der Wickelwelle abwickelbar ist, um je eine transparente Öffnung (16a, 16d, 18a, 18d) in dem Fahrzeugdach bezüglich des Fahrzeuginnenraums mindestens teilweise zu verdecken, wobei jeder Zugspriegel für die Abwickelbewegung der Rollobahn von einem Antriebselement (32a, 32d) angetrieben wird, das zu einer Bewegung entlang der Seite der Rollobahn angetrieben ist, die von der jeweils anderen Rollobahn weg weist, und wobei das Antriebselement von einem Kragarm gebildet wird, der in einem mittleren Abschnitt an dem Zugspriegel angreift.

2. Sonnenschutz-Rollo-Anordnung für ein Fahrzeugdach, mit einer ersten Wickelwelle, auf welche eine erste Rollobahn aufwickelbar ist, und einer zweiten Wickelwelle, auf welche eine zweite Rollobahn aufwickelbar ist, wobei die beiden Rollobahnen in Abstand voneinander und parallel zueinander angeordnet sind, wobei die Rollobahnen an ihrem freien Ende mit je einem Zugspriegel versehen sind, durch dessen Betätigung die jeweilige Rollobahn von der jeweiligen Wickelwelle abwickelbar ist, um je eine transparente Öffnung in dem Fahrzeugdach bezüglich des Fahrzeuginnenraums mindestens teilweise zu verdecken, wobei jeder Zugspriegel für die Abwickelbewegung der Rollobahn von einem Antriebselement angetrieben wird, das zu einer Bewegung entlang der Seite der Rollobahn angetrieben ist, die von der jeweils anderen Rollobahn weg weist, und wobei das Antriebselement von einem Kragarm gebildet wird, der in einem mittleren Abschnitt an dem Zugspriegel angreift.

3. Anordnung gemäß Anspruch 1 oder 2, **dadurch gekennzeichnet, dass** der mittlere Abschnitt weniger als ein Drittel der gesamten Länge des jeweiligen Zugspriegels (26a, 26d) ausmacht.

4. Anordnung gemäß Anspruch 3, **dadurch gekennzeichnet, dass** der Kragarm (32a, 32d) jeweils in der Mitte des Zugspriegels (26a, 26d) angreift.

5. Anordnung gemäß einem der vorhergehenden Ansprüche, **dadurch gekennzeichnet, dass** jeder Kragarm (32a, 32d) jeweils von einem Gleitelement angetrieben ist, welches in einer dachfesten Führung (30a, 30b) gleitend geführt ist, die parallel zu der Rollobahn (20a, 20d) an der Seite der Rollobahn verläuft, die von der jeweils anderen Rollobahn (20d, 20a) weg weist.

6. Anordnung gemäß Anspruch 5, **dadurch gekennzeichnet, dass** jedes Gleitelement fest mit dem Kragarm (32a, 32d) verbunden ist oder diesen durch Anlage in die Richtung der Abwickelbewegung der Rollobahn (20a, 20d) anschiebt.

7. Anordnung gemäß Anspruch 5 oder 6, **dadurch gekennzeichnet, dass** jedes Gleitelement von je einem von einem Elektromotor (40) angetriebenen drucksteifen Antriebskabel (34, 36) angetrieben wird.

8. Anordnung gemäß Anspruch 7, **dadurch gekennzeichnet, dass** ein gemeinsamer Elektromotor (40) für beide Antriebskabel (34, 36) vorgesehen ist.

9. Anordnung gemäß einem der vorhergehenden Ansprüche, **dadurch gekennzeichnet, dass** jeder Zugspriegel (32a, 32d) an beiden Seiten in je einer dachfesten Führungsschiene (28a, 30a, 28d, 30b) geführt ist.

10. Anordnung gemäß einem der vorhergehenden Ansprüche, **dadurch gekennzeichnet, dass** die Wickelwelle (22) in die Aufwickelrichtung vorgespannt ist.

11. Anordnung gemäß einem der vorhergehenden Ansprüche, sofern auf Anspruch 1 rückbezogen, **dadurch gekennzeichnet, dass** eine zweite Wickelwelle (24) mit zwei Rollobahnen (20b, 20c) vorgesehen ist, die spiegelbildlich zu der ersten Wickelwelle (22) mit den zwei Rollobahnen (20a, 20d) ausgebildet und angeordnet ist.

12. Anordnung gemäß Anspruch 11, **dadurch gekennzeichnet, dass** die beiden Wickelwellen (22, 24) unmittelbar benachbart zueinander angeordnet sind.

13. Anordnung gemäß Anspruch 12, sofern auf Anspruch 5 rückbezogen, **dadurch gekennzeichnet, dass** die vier Zugspriegel (32a, 32b, 32c, 32d) von zwei Antriebskabeln (34, 36) angetrieben werden, die von einem gemeinsamen, von einem Elektromotor (40) angetriebenen Ritzel (38) gegenläufig angetrieben werden, wobei die Gleitelemente so mit dem einlaufenden bzw. auslaufenden Ende der Antriebskabel gekoppelt sind, dass die vier Zugspriegel sychron für eine gemeinsame Abwickel- bzw. Aufwickelbewegung angetrieben werden.

14. Anordnung gemäß einem der vorhergehenden Ansprüche, **dadurch gekennzeichnet, dass** die Sonneschutz-Rollo-Anordnung (12) für eine Verwendung mit einem Fahrzeugdach ausgebildet ist, welches einen Hauptrahmen (10) aufweist, der mit mindestens zwei Öffnungen (16a-d) für je eine transparente Scheibe (18a-d) versehen ist, wobei sich zwischen den Öffnungen eine aus dem Fahrzeuginnenraum zugängliche Konsole (14) erstreckt, und wobei die Rollobahnen (20a-d) angeordnet und dimensioniert sind, um den Zugang zu der Konsole bzw. die Sicht auf die Konsole aus dem Fahrzeuginnenraum auch im abgewickelten Zustand freizulassen.

15. Fahrzeugdach mit einem Hauptrahmen, der mit mindestens zwei Öffnungen (16a-d) für je eine transparente Scheibe (18a-d) versehen ist, wobei sich zwischen den Öffnungen eine aus dem Fahrzeuginnenraum zugängliche Konsole (14) erstreckt, und mit einer Sonnenschutz-Rollo-Anordnung (12) mit einer ersten Wickelwelle (22), auf welche zwei in Abstand voneinander und parallel zueinander angeordnete Rollobahnen (20a, 20d) aufwickelbar sind, wobei die Rollobahnen an ihrem freien Ende mit je einem Zugspriegel (26a, 26d) versehen sind, durch dessen Betätigung die jeweilige Rollobahn von der Wickelwelle abwickelbar ist, um mindestens eine der Öffnungen bezüglich des Fahrzeuginnenraums mindestens teilweise zu verdecken, wobei die Rollobahnen angeordnet und dimensioniert sind, um den Zugang zu der Konsole bzw. die Sicht auf die Konsole vom Fahrzeuginnenraum auch im abgewickelten Zustand freizulassen, wobei jeder Zugspriegel für die Abwickelbewegung der Rollobahn von einem Antriebselement (32a, 32d) angetrieben wird, das zu einer Bewegung entlang der Seite der Rollobahn angetrieben ist, die von der jeweils anderen Rollobahn weg weist, und wobei das Antriebselement von einem Kragarm gebildet wird, der in einem mittleren Abschnitt des Zugspriegels an dem Zugspriegel angreift.

16. Fahrzeugdach gemäß Anspruch 15, **dadurch gekennzeichnet, dass** vier Öffnungen (16a-d) sowie eine zweite Wickelwelle (24) mit zwei Rollobahnen (20b, 20c) vorgesehen sind, die spiegelbildlich zu der ersten Wickelwelle (22) mit den zwei Rollobahnen (20a, 20d) ausgebildet und angeordnet ist.

17. Fahrzeugdach gemäß Anspruch 16, **dadurch gekennzeichnet, dass** je zwei der Öffnungen (16a, 16b; 16c, 16d) hintereinander auf jeder Seite der Konsole (14) angeordnet sind.

18. Fahrzeugdach gemäß einem der Ansprüche 15 bis 17, **dadurch gekennzeichnet, dass** jede Rollobahn (20a-d) für das wahlweise Verdecken je einer der Öffnungen (16a-d, 18a-d) vorgesehen ist.

19. Fahrzeugdach mit einem Hauptrahmen, der mit mindestens zwei Öffnungen für je eine transparente Scheibe versehen ist, wobei sich zwischen den Öffnungen eine aus dem Fahrzeuginnenraum zugängliche Konsole erstreckt, und mit einer Sonnenschutz-Rollo-Anordnung mit einer ersten Wickelwelle, auf welche eine erste Rollobahn aufwickelbar ist, und einer zweiten Wickelwelle, auf welche eine zweite Rollobahn aufwickelbar ist, wobei die beiden Rollobahnen in Abstand voneinander und parallel zueinander angeordnet sind, wobei die Rollobahnen an ihrem freien Ende mit je einem Zugspriegel versehen sind, durch dessen Betätigung die jeweilige Rollobahn von der jeweiligen Wickelwelle abwickelbar ist, um mindestens eine der Öffnungen bezüglich des Fahrzeuginnenraums mindestens teilweise zu verdecken, wobei die Rollobahnen angeordnet und dimensioniert sind, um den Zugang zu der Konsole bzw. die Sicht auf die Konsole auch im abgewickelten Zustand freizulassen, wobei jeder Zugspriegel für die Abwickelbewegung der Rollobahn von einem Antriebselement angetrieben wird, das zu einer Bewegung entlang der Seite der Rollobahn angetrieben ist, die von der jeweils anderen Rollobahn weg weist, und wobei das Antriebselement von einem Kragarm gebildet wird, der in einem mittleren Abschnitt des Zugspriegels an dem Zugspriegel angreift.

20. Fahrzeugdach gemäß einem der Ansprüche 15 bis 19, **dadurch gekennzeichnet, dass** die Konsole (14) in den Hauptrahmen (10) integriert ist.

21. Fahrzeugdach gemäß einem der Ansprüche 15 bis 20, **dadurch gekennzeichnet, dass** die Konsole (14) als Gepäckablage, als Halterung für Anzeigemedien und/oder als Halterung für Beleuchtungsmittel ausgebildet ist.

## Claims

1. Roller sunblind arrangement for a vehicle roof, comprising a first winding shaft (22), onto which two roller blind webs (20a, 20d) arranged at a distance from each other and parallel to each other can be wound, the roller blind webs each being provided with a draw bar (26a, 26d) at their free end, as a result of whose activation the respective roller blind web can be unwound from the winding shaft in order in each case at least partly to cover a transparent opening (16a, 16d, 18a, 18d) in the vehicle roof with respect to the vehicle interior, each draw bar for the unwinding movement of the roller blind web being driven by a drive element (32a, 32d), which is driven to make a movement along the side of the roller blind web which points away from the respective other roller blind web, and the drive element being formed by a cantilever arm which acts on the draw bar in a central section.

2. Roller sunblind arrangement for a vehicle roof, comprising a first winding shaft, onto which a first roller blind web can be wound, and a second winding shaft, onto which a second roller blind web can be wound, the two roller blind webs being arranged at a distance from and parallel to each other, the roller blind webs each being provided with a draw bar at their free end, as a result of whose activation the respective roller blind web can be unwound from the respective winding shaft in order in each case at least partly to cover a transparent opening in the vehicle roof with respect to the vehicle interior, each draw bar for the unwinding movement of the roller blind web being driven by a drive element, which is driven to make a movement along the side of the roller blind web which points away from the respective other roller blind web, and the drive element being formed by a cantilever arm which acts on the draw bar in a central section.

3. Arrangement according to claim 1 or 2, **characterized in that** the central section makes up less than one third of the overall length of the respective draw bar (26a, 26d).

4. Arrangement according to claim 3, **characterized in that** the cantilever arm (32a, 32d) in each case acts in the centre of the draw bar (26a, 26d).

5. Arrangement according to one of the preceding claims, **characterized in that** each cantilever arm (32a, 32d) is in each case driven by a sliding element which is guided in a sliding manner in a guide (30a, 30b) that is fixed to the roof and runs parallel to the roller blind web (20a, 20d) on the side of the roller blind web which points away from the respective other roller blind web (20d, 20a).

6. Arrangement according to claim 5, **characterized in that** each sliding element is firmly connected to the cantilever arm (32a, 32d) or pushes the latter, by means of contact, in the direction of the unwinding movement of the roller blind web (20a, 20d).

7. Arrangement according to claim 5 or 6, **characterized in that** each sliding element is driven by a respective drive cable (34, 36) that is rigid in compression and is driven by an electric motor (40).

8. Arrangement according to claim 7, **characterized in that** a common electric motor (40) is provided for the two drive cables (34, 36).

9. Arrangement according to one of the preceding claims, **characterized in that** each draw bar (32a, 32d) is guided on both sides in each case in a guide rail (28a, 30a, 28d, 30b) fixed to the roof.

10. Arrangement according to one of the preceding claims, **characterized in that** the winding shaft (22) is pretensioned in the winding direction.

11. Arrangement according to one of the preceding claims, provided that it refers back to claim 1, **characterized in that** a second winding shaft (24) having two roller blind webs (20b, 20c) is provided, which is designed and arranged in mirror-image fashion in relation to the first winding shaft (22) having the two roller blind webs (20a, 20d).

12. Arrangement according to claim 11, **characterized in that** the two winding shafts (22, 24) are arranged immediately adjacent to each other.

13. Arrangement according to claim 12, provided that it refers back to Claim 5, **characterized in that** the four draw bars (32a, 32b, 32c, 32d) are driven by two drive cables (34, 36) which are driven in opposite directions by a common pinion (38) driven by an electric motor (40), the sliding elements being coupled to the incoming and outgoing end, respectively, of the drive cable in such a way that the four draw bars are driven synchronously for a common unwinding or winding movement.

14. Arrangement according to one of the preceding claims, **characterized in that** the roller sunblind arrangement (12) is designed to be used with a vehicle roof which has a main frame (10) that is provided with at least two openings (16a-d) for a transparent panel (18a-d) in each case, a console (14) accessible from the vehicle interior extending between the openings, and the roller blind webs (20a-d) being arranged and dimensioned in order to leave the access to the console or the view of the console from the vehicle interior free even when the said roller blinds are unwound.

15. Vehicle roof having a main frame which is provided with at least two openings (16a-d) for a transparent panel (18a-d) in each case, a console (14) accessible from the vehicle interior extending between the openings, and having a roller sunblind arrangement (12) comprising a first winding shaft (22), onto which two roller blind webs (20a, 20d) arranged at a distance from each other and parallel to each other can be wound, the roller blind webs each being provided with a draw bar (26a, 26d) at their free end, as a result of whose activation the respective roller blind web can be unwound from the winding shaft in order in each case partly to cover at least one of the openings with respect to the vehicle interior, the roller blind webs being arranged and dimensioned in order to leave the access to the console or the view of the console from the vehicle interior free even when the said roller blinds are unwound, each draw bar for the unwinding movement of the roller blind web being driven by a drive element (32a, 32d), which is driven to make a movement along the side of the roller blind web which points away from the respective other roller blind web, and the drive element being formed by a cantilever arm which acts on the draw bar in a central section of the draw bar.

16. Vehicle roof according to claim 15, **characterized in that** four of the openings (16a-d) are provided and also a second winding shaft (24) having two roller blind webs (20b, 20c), which is designed and arranged in mirror-image fashion in relation to the first winding shaft (22) having the two roller blind webs (20a, 20d).

17. Vehicle roof according to claim 16, **characterized in that** in each case two of the openings (16a, 16b; 16c, 16d) are arranged one after the other on each side of the console (14).

18. Vehicle roof according to one of claims 15 to 17,
**characterized in that** each roller blind web (20a-d) is provided for the optional covering of one of the openings (16a-d, 18a-d) in each case.

19. Vehicle roof having a main frame which is provided with at least two openings for a transparent panel in each case, a console accessible from the vehicle interior extending between the openings, and having a roller sunblind arrangement comprising a first winding shaft, onto which a first roller blind web can be wound, and a second winding shaft, onto which a second roller blind web can be wound, the two roller blind webs being arranged at a distance from and parallel to each other, the roller blind webs each being provided with a draw bar at their free end, as a result of whose activation the respective roller blind web can be unwound from the winding shaft in order in each case at least partly to cover at least one of the openings with respect to the vehicle interior, the roller blind webs being arranged and dimensioned in order to leave the access to the console or the view of the console free even when the said roller blinds are unwound, each draw bar for the unwinding movement of the roller blind web being driven by a drive element, which is driven to make a movement along the side of the roller blind web which points away from the respective other roller blind web, and the drive element being formed by a cantilever arm which acts on the draw bar in a central section of the draw bar.

20. Vehicle roof according to one of claims 15 to 19, **characterized in that** the console (14) is integrated into the main frame (10).

21. Vehicle roof according to one of claims 15 to 20, **characterized in that** the console (14) is formed as a luggage rack, as a holder for display media and/or as a holder for illuminating means.

## Revendications

1. Ensemble de store pare-soleil pour un toit de véhicule, avec un premier arbre d'enroulement (22) sur lequel peuvent être enroulées deux bandes de store (20a, 20d) disposées à distance l'une de l'autre et parallèlement entre elles, sachant que les bandes de store sont respectivement pourvues à leur extrémité libre d'un arceau de traction (26a, 26d) par l'actionnement duquel la bande de store respective peut être déroulée de l'arbre d'enroulement afin de recouvrir au moins partiellement vis-à-vis de l'intérieur du véhicule une ouverture transparente respective (16a, 16d, 18a, 18d) dans le toit de véhicule, sachant que chaque arceau de traction est entraîné, pour le mouvement de déroulement de la bande de store, par un élément d'entraînement (32a, 32d) qui est entraîné en déplacement le long du côté de la bande de store qui est éloigné de l'autre bande de store respective, et sachant que l'élément d'entraînement est formé par un bras en porte-à-faux qui agit dans une partie médiane sur l'arceau de traction.

2. Ensemble de store pare-soleil pour un toit de véhicule, avec un premier arbre d'enroulement sur lequel peut être enroulée une première bande de store et un deuxième arbre d'enroulement sur lequel peut être enroulée une deuxième bande de store, sachant que les deux bandes de store sont disposées à distance l'une de l'autre et parallèlement entre elles, sachant que les bandes de store sont respectivement pourvues à leur extrémité libre d'un arceau de traction par l'actionnement duquel la bande de store respective peut être déroulée de l'arbre d'enroulement respectif afin de recouvrir au moins partiellement vis-à-vis de l'intérieur du véhicule une ouverture transparente respective dans le toit de véhicule, sachant que chaque arceau de traction est entraîné, pour le mouvement de déroulement de la bande de store, par un élément d'entraînement qui est entraîné en déplacement le long du côté de la bande de store qui est éloigné de l'autre bande de store respective, et sachant que l'élément d'entraînement est formé par un bras en porte-à-faux qui agit dans une partie médiane sur l'arceau de traction.

3. Ensemble selon la revendication 1 ou 2, **caractérisé en ce que** la partie médiane occupe moins d'un tiers de la longueur totale de l'arceau de traction respectif (26a, 26d).

4. Ensemble selon la revendication 3, **caractérisé en ce que** le bras en porte-à-faux (32a, 32d) agit respectivement au milieu de l'arceau de traction (26a, 26d).

5. Ensemble selon l'une des revendications précédentes, **caractérisé en ce que** chaque bras en porte-à-faux (32a, 32d) est respectivement entraîné par un élément coulissant qui est guidé en coulissement dans un guide (30a, 30b) solidaire du toit qui s'étend parallèlement à la bande de store (20a, 20d) sur le côté de la bande de store qui est éloigné de l'autre bande de store respective (20d, 20a).

6. Ensemble selon la revendication 5, **caractérisé en ce que** chaque élément coulissant est fixement relié au bras en porte-à-faux (32a, 32d) ou pousse ce dernier par application dans la direction du mouvement de déroulement de la bande de store (20a, 20d).

7. Ensemble selon la revendication 5 ou 6, **caractérisé en ce que** chaque élément coulissant est entraîné par un câble d'entraînement respectif (34, 36) rigide en compression, entraîné par un moteur électrique (40).

8. Ensemble selon la revendication 7, **caractérisé en ce qu'**il est prévu un moteur électrique commun (40) pour les deux câbles d'entraînement (34, 36).

9. Ensemble selon l'une des revendications précédentes, **caractérisé en ce que** chaque arceau de traction (32a, 32d) est guidé de part et d'autre dans un rail de guidage respectif (28a, 30a, 28d, 30b) solidaire du toit.

10. Ensemble selon l'une des revendications précédentes, **caractérisé en ce que** l'arbre d'enroulement (22) est précontraint dans la direction d'enroulement.

11. Ensemble selon l'une des revendications précédentes, dans la mesure où elle est rattachée à la revendication 1, **caractérisé en ce qu'**il est prévu un deuxième arbre d'enroulement (24) pourvu de deux bandes de store (20b, 20c), qui est configuré et disposé symétriquement par rapport au premier arbre d'enroulement (22) pourvu des deux bandes de store (20a, 20d).

12. Ensemble selon la revendication 11, **caractérisé en ce que** les deux arbres d'enroulement (22, 24) sont disposés en voisinage immédiat l'un de l'autre.

13. Ensemble selon la revendication 12, dans la mesure où elle est rattachée à la revendication 5, **caractérisé en ce que** les quatre arceaux de traction (32a, 32b, 32c, 32d) sont entraînés par deux câbles d'entraînement (34, 36) qui sont entraînés en sens contraires par un pignon commun (38) entraîné par un moteur électrique (40), sachant que les éléments coulissants sont couplés respectivement à l'extrémité entrante ou sortante des câbles d'entraînement de telle sorte que les quatre arceaux de traction sont entraînés en synchronisme pour un mouvement commun de déroulement ou respectivement d'enroulement.

14. Ensemble selon l'une des revendications précédentes, **caractérisé en ce que** l'ensemble (12) de store pare-soleil est conçu pour une utilisation avec un toit de véhicule qui présente un cadre principal (10) qui est pourvu d'au moins deux ouvertures (16a-d), chacune pour une vitre transparente (18a-d), sachant qu'une console (14) accessible depuis l'intérieur du véhicule s'étend entre les ouvertures, et sachant que les bandes de store (20a-d) sont disposées et dimensionnées de telle sorte que, même dans l'état déroulé, elles laissent libre l'accès à la console ou encore la vue sur la console depuis l'intérieur du véhicule.

15. Toit de véhicule, avec un cadre principal qui est pourvu d'au moins deux ouvertures (16a-d), chacune pour une vitre transparente (18a-d), sachant qu'une console (14) accessible depuis l'intérieur du véhicule s'étend entre les ouvertures, et avec un ensemble (12) de store pare-soleil comportant un premier arbre d'enroulement (22) sur lequel peuvent être enroulées deux bandes de store (20a, 20d) disposées à distance l'une de l'autre et parallèlement entre elles, sachant que les bandes de store sont respectivement pourvues à leur extrémité libre d'un arceau de traction (26a, 26d) par l'actionnement duquel la bande de store respective peut être déroulée de l'arbre d'enroulement afin de recouvrir au moins partiellement vis-à-vis de l'intérieur du véhicule au moins une des ouvertures, sachant que les bandes de store sont disposées et dimensionnées afin, même dans l'état déroulé, de laisser libre l'accès à la console ou encore la vue sur la console depuis l'intérieur du véhicule, sachant que chaque arceau de traction est entraîné, pour le mouvement de déroulement de la bande de store, par un élément d'entraînement (32a, 32d) qui est entraîné en déplacement le long du côté de la bande de store qui est éloigné de l'autre bande de store respective, et sachant que l'élément d'entraînement est formé par un bras en porte-à-faux qui agit sur l'arceau de traction dans une partie médiane de l'arceau de traction.

16. Toit de véhicule selon la revendication 15, **caractérisé en ce qu'**il est prévu quatre ouvertures (16a-d) ainsi qu'un deuxième arbre d'enroulement (24) pourvu de deux bandes de store (20b, 20c), qui est configuré et disposé symétriquement par rapport au premier arbre d'enroulement (22) pourvu des deux bandes de store (20a, 20d).

17. Toit de véhicule selon la revendication 16, **caractérisé en ce que** deux des ouvertures (16a, 16b ; 16c, 16d) sont respectivement disposées l'une derrière l'autre de chaque côté de la console (14).

18. Toit de véhicule selon l'une des revendications 15 à 17, **caractérisé en ce que** chaque bande de store (20a-d) est respectivement prévue pour obturer sélectivement une des ouvertures (16a-d, 18a-d).

19. Toit de véhicule, avec un cadre principal qui est pourvu d'au moins deux ouvertures, chacune pour une vitre transparente, sachant qu'une console accessible depuis l'intérieur du véhicule s'étend entre les ouvertures, et avec un ensemble de store pare-soleil comportant un premier arbre d'enroulement sur lequel peut être enroulée une première bande de store et un deuxième arbre d'enroulement sur lequel peut être enroulée une deuxième bande de store, sachant que les deux bandes de store sont disposées à distance l'une de l'autre et parallèlement entre elles, sachant que les bandes de store sont respectivement pourvues à leur extrémité libre d'un arceau de traction par l'actionnement duquel la bande de store respective peut être déroulée de l'arbre d'enroulement respectif afin de recouvrir au moins partiellement vis-à-vis de l'intérieur du véhicule au moins une des ouvertures, sachant que les bandes de store sont disposées et dimensionnées afin, même dans l'état déroulé, de laisser libre l'accès à la console ou encore la vue sur la console, sachant que chaque arceau de traction est entraîné, pour le mouvement de déroulement de la bande de store, par un élément d'entraînement qui est entraîné en déplacement le long du côté de la bande de store qui est éloigné de l'autre bande de store respective, et sachant que l'élément d'entraînement est formé par un bras en porte-à-faux qui agit sur l'arceau de traction dans une partie médiane de l'arceau de traction.

20. Toit de véhicule selon l'une des revendications 15 à 19, **caractérisé en ce que** la console (14) est intégrée dans le cadre principal (10).

21. Toit de véhicule selon l'une des revendications 15 à 20, **caractérisé en ce que** la console (14) est conçue comme vide-poches, comme support pour des moyens d'affichage et/ou comme support pour des moyens d'éclairage.
